**Europäisches Patentamt**

**European Patent Office**

**Office européen des brevets**

(19)

(11) Numéro de publication: **0 228 929**
**B1**

# FASCICULE DE BREVET EUROPEEN

(12)

(45) Date de publication du fascicule du brevet:
**31.01.90**

(21) Numéro de dépôt: **86402549.9**

(22) Date de dépôt: **18.11.86**

(51) Int. Cl.⁴: **G21C 9/04,** G21C 15/24

(54) **Dispositif pour la liaison anti-séismes entre le bas de pompe et la sphère d'un réacteur nucléaire.**

(30) Priorité: **03.12.85 FR 8517844**

(43) Date de publication de la demande:
**15.07.87 Bulletin 87/29**

(45) Mention de la délivrance du brevet:
**31.01.90 Bulletin 90/5**

(84) Etats contractants désignés:
**DE FR GB IT**

(56) Documents cités:
**FR-A- 2 300 253**
**FR-A- 2 524 687**
**GB-A- 2 077 025**

(73) Titulaire: **JEUMONT-SCHNEIDER Société anonyme dite:,
31-32, Quai de Dion Bouton, F-92811 Puteaux Cedex(FR)**

(72) Inventeur: **Canini, Jean-Marc, rue de Quiévelon Albes,
F-59149 Cousolre(FR)**
Inventeur: **Watre, Serge, 714, rue Victor Basch,
F-59460 Jeumont(FR)**

(74) Mandataire: **Le Brusque, Maurice et al, Cabinet Harlé et
Phélip 21, rue de la Rochefoucauld, F-75009 Paris(FR)**

## Description

La présente invention concerne un dispositif amortisseur anti-séismes pour les pompes primaires encastrées des réacteurs nucléaires et, plus particulièrement, un tel dispositif qui est destiné à limiter l'effet de pendule de ces pompes en cas de séisme.

On sait que, dans les réacteurs nucléaires équipés de pompes primaires dites "encastrées" de grande hauteur, il est nécessaire, en cas de séisme, d'immobiliser la partie inférieure des pompes par rapport à la cuve du réacteur. Si l'on ne prenait pas cette précaution, les pompes pourraient subir des dégâts importants, comme les effets néfastes dûs à la flexion du corps de pompe, les dégâts apparaissant au niveau de la fixation de la pompe sur la dalle, et d'autres encore.

Les dispositifs d'immobilisation qui sont prévus doivent réagir instantanément et sans intervention extérieure pour interdire tout déplacement important du bas de la pompe.

Ces dispositifs doivent, en outre, permettre les déplacements relatifs des pompes et du sommier du réacteur qui résultent des dilatations thermiques différentielles horizontales et verticales entre la cuve et la dalle lors des montées en température du réacteur.

Dans les surrégérateurs actuels, les pompes primaires sont posées sur la dalle par l'intermédiaire d'un anneau élastique ou d'un dispositif glissant, ces systèmes autorisant les mouvements lents lors des dilatations thermiques différentielles entre la dalle et la cuve : dans le cas d'un anneau élastique il se produit une inclinaison plus ou moins importante de l'axe de la pompe et, dans celui d'un dispositif glissant, un déplacement variable de l'axe vertical de la pompe, la liaison entre cette dernière et le sommier étant fixe lorsque la pompe est posée sur un anneau élastique, et une manchette articulée reliant la pompe à la cuve dans la solution comprenant un dispositif glissant.

Pour leur part, les dilatations différentielles entre la cuve et la dalle dans le sens radial ou vertical sont autorisées par coulissement de la base de la pompe dans la liaison entre cette pompe et le sommier ou par modification de la longueur de la manchette articulée.

Le but de l'invention est de fournir un dispositif amortisseur anti-séismes pour de telles pompes primaires encastrées dans les réacteurs nucléaires qui permette une fixation rigide de ces pompes primaires directement sur la dalle, ce qui fournit une solution nettement plus économique que celle des système connus.

Bien entendu, le dispositif amortisseur selon l'invention doit en outre permettre à la fois l'étanchéité hydraulique, la continuité de la veine hydraulique entre le bas de la pompe et la sphère de refoulement qu'elles que soient les dilations différentielles axiales et/ou radiales dues aux différences de températures entre la dalle et le sommier, et le maintien ferme du bas des pompes pour éviter l'effet de pendule de ces dernières en cas de séismes.

Selon l'invention, ce but est atteint grâce à un dispositif pour la liaison anti-séismes entre le bas de pompe d'une centrale nucléaire et ce que l'on appelle sa sphère, encore qu'elle puisse comporter des parties cylindriques, dispositif qui est caractérisé par le fait que le bas de pompe est muni extérieurement d'une bride logée avec un faible jeu axial et un jeu radial important dans une cuvette qui est fermée par un couvercle amovible et qui peut coulisser axialement avec un faible jeu dans la sphère munie d'une portion cylindrique à cet endroit, un dispositif amortisseur radial étant monté entre la bride et la cuvette pour autoriser sans contrainte les déplacements lents de la bride par rapport à la cuvette et bloquer ces déplacements lorsqu'ils sont rapides, cependant que l'extrémité inférieure du bas de pompe comporte un collier extérieur qui, par l'intermédiaire d'un joint métallique, peut coulisser axialement sur une portée cylindrique solidaire de la paroi latérale interne de la sphère,

des passages calibrés ménagés à la périphérie de la cuvette permettant une circulation contrôlée du fluide caloporteur du réacteur entre le bas de la pompe et la partie supérieure de l'espace compris entre ce dernier et la sphère.

On comprend que ce dispositif autorise les déplacements lents du bas de pompe par rapport à la sphère dans le sens horizontal par glissement de la bride dans sa cuvette, et, dans le sens vertical, par coulissement dans la sphère de la cuvette et du collier de la partie inférieure du bas de pompe. En effet, les passages ménagés dans le joint du collier et à la périphérie de la cuvette font que le fluide qui baigne l'ensemble n'offre qu'une résistance pratiquement nulle aux déplacements axiaux ou verticaux très lents, tels que ceux résultant, par exemple, des dilatations thermiques différentielles. Il en est de même dans le sens horizontal puisque, comme cela a été dit plus haut, le dispositif amortisseur monté entre la bride et sa cuvette autorise sans contrainte les déplacements relatifs entre ces deux organes lorsqu'ils sont très lents.

Dans une forme de réalisation avantageuse de la présente invention, le dispositif d'amortissement radial spécifié ci-dessus est constitué par une bague d'amortissement entourant la bride du bas de pompe en préservant le jeu important qui doit exister dans le sens radial entre cette bride et la cuvette, et, de préférence, cette bague présente des épaulements angulairement espacés de manière régulière qui sont par exemple au nombre de quatre à 90° l'un de l'autre, qui portent sur des surfaces correspondantes de la périphérie de la bride et/ou sur la paroi latérale interne de la cuvette et qui délimitent des chambres entre la bague et la bride et/ou entre la bague et la paroi de la cuvette.

Dans le cas où la bague comporte quatre épaulements à 90° l'un de l'autre, et où ceux-ci sont alternativement ménagés à l'intérieur et à l'extérieur de la bague, on obtient deux paires de chambres diamétralement opposées, l'une intérieure et l'autre extérieure. De préférence, les épaulements en question se terminent par un méplat qui porte sur une surface plane correspon dante de la paroi de la cuvette et/ou de la bride.

Dans une autre forme de réalisation de l'invention, le dispositif amortisseur radial spécifié ci-dessus est constitué par une pluralité d'amortisseurs à fuite de fluide, par exemple au nombre de quatre, qui sont angulairement espacés de manière régulière et dont une extrémité s'appuie sur la paroi latérale interne de la cuvette et l'autre sur la périphérie de la bride.

On comprend que la possibilité de déplacements horizontaux lents, dûs par exemple aux dilatations thermiques différentielles, est assurée dans le premier cas par des fuites de fluide entre les diverses chambres de la bague d'amortissement, et, dans le second cas, par les passages de fuite prévus de manière classique dans les amortisseurs à fuite que l'on appelle couramment des "dashpots". Au contraire, les déplacements rapides résultant par exemple de séismes sont bloqués, du fait que le fluide ne peut pas se déplacer très rapidement à travers les passages très étroits et calibrés spécifiés ci-dessus. Bien entendu, il en est de même pour les déplacements verticaux, le fluide ne pouvant pas passer très rapidement à travers les passages prévus à la périphérie de la cuvette et dans le joint solidaire du collier entourant le bas de pompe.

La description qui va suivre, et qui ne présente aucun caractère limitatif, permettra de bien comprendre comment la présente invention peut être mise en pratique. Elle doit être lue en regard des dessins annexés, parmi lesquels :

- La figure 1 montre une vue en coupe axiale du dispositif selon l'invention dans une première forme de réalisation;
- La figure 2 est une vue en coupe partielle prise selon la ligne II-II de la figure 1; et,
- La figure 3 montre une vue en coupe axiale partielle d'une autre forme de réalisation du dispositif amortisseur selon la figure 1.

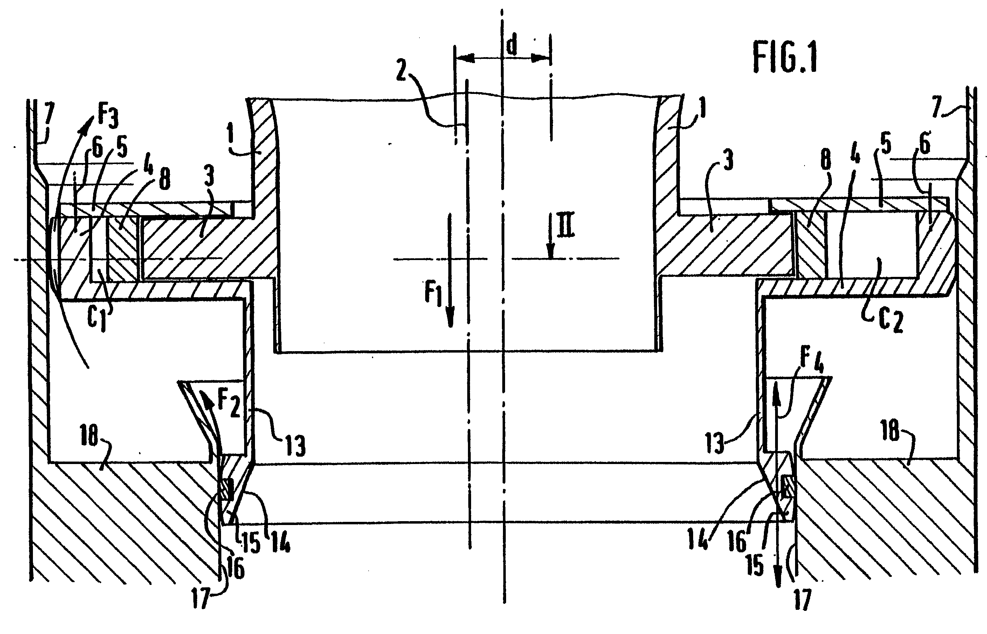

Comme on le voit sur la figure 1, la partie basse 1 de la pompe qui n'a pas été représentée dans son ensemble est cylindrique de révolution autour d'un axe vertical 2 et, à une certaine distance de son extrémité inférieure, elle présente sur sa périphérie, en une seule pièce avec elle, une bride annulaire 3 à section rectangulaire qui est montée dans une cuvette annulaire 4 fermée vers le haut par un couvercle 5 également annulaire qui en est rendu solidaire par des boulons ou des organes analogues dont seuls les axes 6 ont été représentés, et qui entoure avec un jeu le bas de pompe 1.

Une bague d'amortissement 8 cercle la bride 3 et son diamètre extérieur est largement inférieur au diamètre intérieur de la cuvette 4, ce qui autorise les déplacements horizontaux de la bride 3 solidaire du bas de pompe par rapport à la cuvette 4 qui peut coulisser avec un faible jeu dans un renfoncement cylindrique de la sphère 7 et qui doit donc être considéré comme pratiquement solidaire de cette dernière dans le sens horizontal. Au contraire, dans le sens radial, le jeu entre la bride 3 et la cuvette 4 est très faible, de sorte que ces deux organes sont pratiquement solidaires l'un de l'autre dans ce sens.

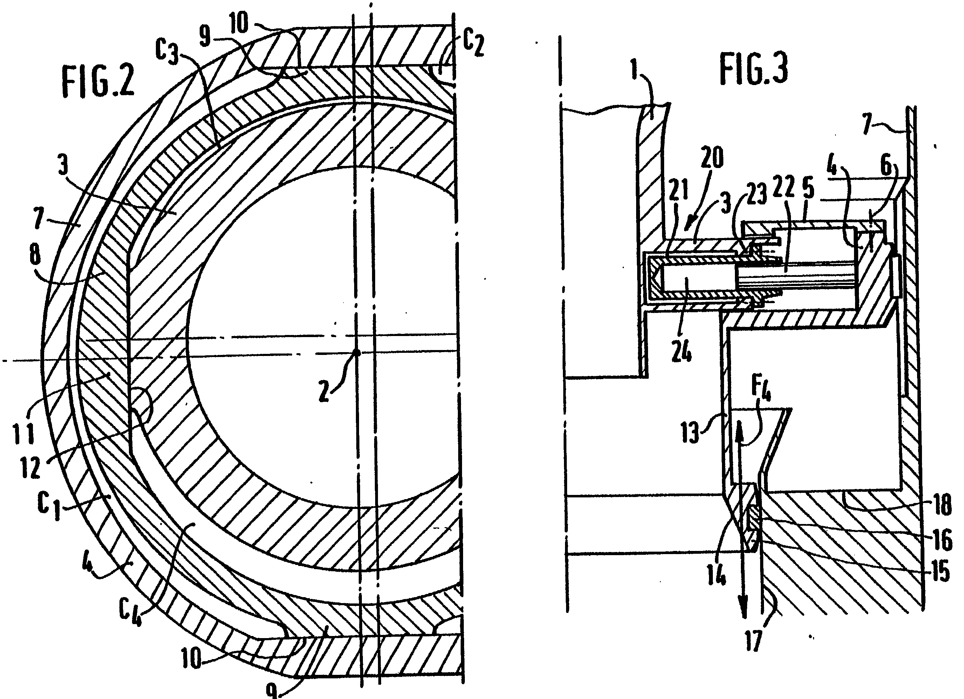

La bague 8 (voir la figure 2) comporte sur son bord extérieur deux épaulements 9 diamétralement opposés et terminés chacun par un méplat 10 qui s'appuie sur une portée plane en saillie sur la surface latérale interne de la cuvette 4, et, sur son bord intérieur, deux épaulements 11 diamétralement opposés et à 90° des précédents terminés chacun par une portée plane 12 qui s'appuie sur un méplat ménagé sur la surface latérale externe de la bride 3, ce qui délimite entre la bague d'amortissement 8 et la cuvette 4 deux chambres sensiblement hémi-annulaires C1 et C2 diamétralement opposées l'une par rapport à l'autre, et, entre cette même bague 8 de la bride 3, deux chambres C3 et C4 identiques aux chambres C1 et C2, mais décalées de 90° par rapport à ces dernières.

D'autre part, le bord intérieur de la cuvette 4 se prolonge vers le bas par une jupe cylindrique 13 évasée vers le bas en un tronc de cône 14 et terminée sur sa périphérie par un collier 15 qui en fait partie intégrante et sont la surface extérieure présente une rainure annulaire munie d'un joint métallique 16. Ce dernier est comprimé contre une portée cylindrique 17 qui est reliée à la paroi interne de la sphère 7 par une couronne horizontale 18. Enfin, des plats rainurés avec clavettes représentés figure 2 empêchent toute rotation du dispositif amortisseur.

Dans cette installation, le fluide caloporteur qui est, par exemple, du sodium fondu, circule vers le bas dans la pompe (Flèche F1), et il peut remonter entre la sphère 7 et le bas de pompe 1 à travers des passages convenablement calibrés qui peuvent être des orifices ou des rainures et qui sont ménagés dans le joint 16 (Flèche F2) et à la périphérie de la cuvette 4 (Flèche F3).

Le fonctionnement de ce dispositif amortisseur est le suivant: les mouvements relatifs verticaux de la pompe dans la sphère 7 (Flèche F4) sont autorisés par coulissement du collier 15, lié à la pompe dans le sens horizontal, ainsi que cela a été dit plus haut, dans la jupe 17 solidaire de la sphère 7 et de la cuvette 4 dans le renfoncement cylindrique interne de cette sphère 7.

Quant aux mouvements relatifs horizontaux entre la pompe et la sphère, ils sont réalisés par glissement de la bride annulaire 3 dans la cuvette 4 solidaire de la sphère dans le sens horizontal, avec un déplacement maximal possible $\underline{d}$ qui est égal à la différence entre les diamètres interne de la cuvette 4 et externe de la bague d'amortissement 8.

Lors de déplacements brusques dûs, par exemple, aux séismes, la liaison entre la pompe 1 et la sphère 7 comprime le fluide emprisonné entre cette dernière et la bague 8, du fait de l'ajustement des éléments en cause, ce qui communique à son tour un déplacement à la bague 8, le fluide n'ayant pas le temps de fuir entre ces éléments, contrairement à ce qui se passe dans le cas de déplacements lents résultant, par exemple de dilatations thermiques différentielles. La bague 8, en contact avec la pompe par l'intermédiaire de la bride 3, déplace à son tour le bas de pompe 1 dans la direction allant de C1 à C2.

Toujours dans le cas de déplacements brusques, allant cette fois dans la direction de C3 à C4, la bague 8, en contact mécanique avec la liaison entre la pompe et la sphère, reçoit le déplacement directement de celle-ci. Ensuite, la bague 8 comprime le flui-

de confiné dans la chambre qui est située entre elle et la pompe, en communiquant ainsi son déplacement à cette dernière.

Les chambres diamétralement opposées à celles qui sont comprimées subissent pour leur part une dépression et ajoutent leur effet amortisseur à celui des chambres qui sont comprimées.

En cas de déplacement dans une direction quelconque, par exemple à 45° par rapport aux axes principaux, les chambres C1, C2, C3 et C4 agissent simultanément.

Enfin, lors des mouvements lents dûs aux dilatations thermiques dans un plan horizontal, les ajustements entre les divers éléments engendrent assez de fuites pour éviter les effets de compression et de dépression des chambres en question. Cette particularité permet les déplacements sans contrainte de la pompe par rapport à la sphère. Il en est de même pour les mouvements verticaux, le fluide en écoulement lent pouvant traverser aisément les passages ménagés à la périphérie de la cuvette 4.

Dans la variante représentée très partiellement sur la figure 3, sur laquelle les organes identiques à ceux des figures 1 et 2, ou jouant le même rôle, ont été affectés des mêmes repères, la bague d'amortissement 8 est remplacée par plusieurs dispositifs d'amortissement à fuites de fluide 20, au nombre de quatre par exemple, qui sont également connus sous le nom de "dashpots", qui sont équidistants entre eux et qui sont montés radialement entre la cuvette 4 et des cavités ménagées dans la bride 3.

Ces dispositifs sont classiques et ils ne seront pas décrits ici de manière détaillée. On se contentera d'indiquer qu'ils comprennent notamment un cylindre 21 logé dans la cavité correspondante de la bride 3, un piston 22, une soupape d'alimentation de haute pression du corps du piston, le piston étant poussé vers l'extérieur de cylindre 21 en appuyant l'extrémité libre de ce piston sur la paroi latérale interne de la cuvette 4, et un ou des orifices ou rainures de fuite 23, le cylindre 21 et le piston 22 délimitant une chambre 24 qui, dans le cas présent, est remplie de sodium liquide, puisqu'elle débouche dans la cuvette 4 qui est pleine de ce fluide.

Lors de déplacements brusques, dûs par exemple à des séismes, la liaison entre la pompe et la sphère comprime le sodium fondu contenu dans les chambres 24. Ce fluide n'ayant pas le temps de s'en échapper par les orifices ou rainures calibrées 23, les pistons 22 qui ferment les chambres 24 se trouvent pratiquement bloqués. En revanche, dans le cas de déplacements lents résultant de dilatations thermiques différentielles dans un plan horizontal, le fluide peut s'écouler à travers les orifices ou rainures 23, ce qui autorise sans contrainte les déplacements en question.

La partie basse de la liaison entre le bas de pompe 1 et la sphère 7 est de même conception que dans la forme de réalisation précédente.

## Revendications

1. Dispositif pour la liaision anti-séismes entre le bas de la pompe et la sphère de refoulement d'un réacteur nucléaire, caractérisé en ce qu'il comprend une cuvette (4) pouvant glisser axialement dans une portion de la sphère (7), le bas de la pompe présentant une bride (3) logée dans ladite cuvette (4) et pouvant glisser axialement avec ladite cuvette dans ladite portion de la sphère et radialement dans ladite cuvette, un dispositif d'amortissement radial étant prévu entre ladite bride (3) et ladite cuvette (4) pour permettre sans contrainte les déplacements radiaux relativement lents de la bride dans la cuvette et bloquer ces déplacements radiaux lorsqu'ils sont relativement rapides et un dispositif d'amortissement axial comprenant des passages de fluide formés dans ladite cuvette (4) pour permettre sans contrainte les déplacements axiaux relativement lents de ladite cuvette dans ladite portion de la sphère (7) et bloquer ces dépalcements axiaux lorsqu'ils sont relativement rapides.

2. Dispositif selon la revendication 1, caractérisé en ce que la cuvette (4) présente un collier (15) entourant le bas de la pompe et pouvant glisser axialement dans une portée cylindrique (17) solidaire de la paroi interne de la sphère (7).

3. Dispositif selon la revendication 2, caractörisé en ce que ledit collier (15) est muni d'un joint métallique (16) pouvant glisser axialement dans ladite portée (17).

4. Dispositif selon la revendication 3, caractérisé en ce que lesdits passages de fluide comprennent des passages formés dans ledit joint (16) et à la périphérie externe de ladite cuvette (4).

5. Dispositif selon l'une des revendications 1à 4, caractérisé en ce que ledit dispositif d'amortissement radial comprend une bague d'amortissement (8) entourant ladite bride (3) dans ladite cuvette (4), ladite bague pouvant glisser radialement dans ladite cuvette et ladite bride pouvant glisser radialement dans ladite bague.

6. Dispositif selon la revendication 5, caractérisé en ce que ladite bague présente des premiers épaulements externes (9), diamétralement opposés et portant sur des surfaces internes de la cuvette, et des seconds épaulements internes (11), diamétralement opposés, orientés à sensiblement 90° desdits premiers épaulements et portan sur des surfaces externes de ladite bride (3), lesdits premiers épaulements délimitant des chambres de fluide (C1, C2), diamétralement opposées entre ladite bague (8) et ladite cuvette (4) et lesdits seconds épaulements délimitant des chambres de fluide (C3, C4), diamétralement opposées, entre ladite bague (8) et ladite bride (3).

7. Dispositif selon la revendication 6, caractérisé en ce que lesdits premiers et seconds épaulements présentent une portée plane (10, 12) qui porte sur une surface plane correspondante de ladite bride (3) et de ladite cuvette (4).

8. Dispositif selon l'une des revendications 1 à 4, caractérisé en ce que ledit dispositif d'amortissement radial comprend une pluralité d'amortisseurs à fuite de fluide (20), ou "dashpots", montés radialement entre ladite cuvette (4) et ladite bride (3).

**Claims**

1. Mechanism for anti-seismic connection between the pump base and the dome of a nuclear power station, characterized in that it includes a socket (4) axially slidable within a portion of said dome (7), said pump base having a flange (3) received in said socket (4) axially movable with said socket within said portion of said dome and radially movable within said socket, radial fluid damping means between said flange (3) and said socket (4) for permitting substantially unconstrained relatively slow radial movements of said flange within said socket and for blocking relatively rapid radial movements of said flange within said socket means and axial fluid damping means including fluid passages formed in said socket (4) for permitting substantially unconstrained relatively slow axial movements of said socket within said portion of said dome (7) and for blocking relatively rapid axial movements of said socket means within said portion of said dome.

2. Mechanism according to claim 1, characterized in that said socket (4) includes a collar (15) surrounding said pump base and axially slidable within a circumferential bearing surface (17) solidly fixed to the internal wall of said dome (7).

3. Mechanism according to claim 2, characterized in that said collar (15) has a metallic joint (16) axially slidable within said bearing surface (17).

4. Mechanism according to claim 3, characterized in that said fluid passages include passages formed in said joint (16) and in an outer peripheral portion of said socket (4).

5. Mechanism according to claims 1 to 4, characterized in that said radial damping means includes a damper ring (8) surrounding said flange (3) within said socket (4) said damper ring being radially movable within said socket and said flange being radially movable within said damper ring.

6. Mechanism according to claim 5, characterized in that said ring has diametrically opposed external first projection means (9) bearing on internal flats of said socket and diametrically opposed internal second projection means (11) oriented substantially at 90° to said first projection means and bearing on external flats of said ring (3), said first projection means delimiting diametrically opposed fluid chambers (C1, C2) between said ring (8) and said socket (4), and said second projection means delimiting diametrically opposed fluid chambers (C3, C4) between said ring (8) and said flange (3).

7. Mechanism according to claim 6, characterized in that said first and second projection means have a flat surface (10, 12) bearing on the corresponding flat of said flange (83) and of said socket (4).

8. Mechanism according to one of claims 1 to 4, characterized in that said radial damping means includes a plurality of fluid-escape damping mechanisms (20) or "dashpots" disposed radially between said flange (3) and said socket (4).

**Patentansprüche**

1. Vorrichtung zur erdbebensicheren Verbindung des unteren Teils einer Pumpe mit dem Rückförderbereich eines Kernreaktors, dadurch gekennzeichnet, daß sie ein beckenartiges Gehäuse (4) umfaßt, das axial in einem Abschnitt des Rückförderbereichs (7) gleiten kann, daß der untere Teil der Pumpe einen Flansch (3) aufweist, der sich in dem Gehäuse befindet und mit dem Gehäuse innerhalb des genannten Abschnittes des Rückförderbereiches axial gleiten kann und in dem Gehäuse radial gleiten kann, daß eine radiale Dämpfungseinrichtung zwischen dem Flansch (3) und dem Gehäuse (4) vorgesehen ist, um die relativ langsamen radialen Verschiebungen des Flansches in dem Gehäuse ohne Beanspruchung zu erlauben und diese radialen Verschiebungen zu blockieren, wenn sie relativ schnell sind, und daß eine axiale Dämpfungseinrichtung vorgesehen ist, die Fluiddurchgänge umfaßt, die in dem Gehäuse (4) ausgebildet sind, um die relativ langsamen axialen Verschiebungen des Gehäuses in dem genannten Abschnitt des Rückförderbereiches ohne Beanspruchungen zu erlauben und diese axialen Verschiebungen zu blockieren, wenn sie relativ schnell sind.

2. Vorrichtung nach Anspruch 1, dadurch gekennzeichnet, daß das Gehäuse (4) einen Ringteil (15) aufweist, der den unteren Teil der Pumpe umgibt und an einer zylindrischen Anlagefläche (17), die einstückig an der Innenwand des Rückförderbereiches (7) ausgebildet ist, axial gleiten kann.

3. Vorrichtung nach Anspruch 2, dadurch gekennzeichnet, daß der Ringteil (15) mit einer Metalldichtung (16) ausgestattet ist, die an der Anlagefläche (17) axial gleiten kann.

4. Vorrichtung nach Anspruch 3, dadurch gekennzeichnet, daß die Fluiddurchgänge Durchgangswege umfassen, die in der Dichtung (16) und an dem Außenumfang des Gehäuses (4) ausgebildet sind.

5. Vorrichtung nach einem der Ansprüche 1 bis 4, dadurch gekennzeichnet, daß die radiale Dämpfungseinrichtung einen Dämpfungsring (8) umfaßt, der den Flansch (3) in dem Gehäuse (4) umgibt, wobei der Ring radial in dem Gehäuse und der Flansch radial in dem Ring gleiten kann.

6. Vorrichtung nach Anspruch 5, dadurch gekennzeichnet, daß der Ring erste Außenansätze (9) aufweist, die sich diametral gegenüberliegen und an Innenflächen des Gehäuses anliegen, und zweite Innenansätze (11) aufweist, die sich diametral gegenüberliegen und gegenüber den ersten Ansätzen im wesentlichen um 90° ausgerichtet an Außenflächen des Flansches (3) anliegen, daß die ersten Ansätze Fluidkammern (C1, C2) begrenzen, die sich zwischen dem Ring (8) und dem Gehäuse (4) diametral gegenüberliegen, und daß die zweiten Ansätze Fluidkammern (C3, C4) begrenzen, die sich zwischen dem Ring (8) und dem Flansch (3) diametral gegenüberliegen.

7. Vorrichtung nach Anspruch 6, dadurch gekennzeichnet, daß die ersten und zweiten Ansätze ebene Anlageflächen (10, 12) aufweisen, die an einer entsprechenden ebenen Fläche des Flansches (3) und des Gehäuses (4) anliegen.

8. Vorrichtung nach einem der Ansprüche 1 bis 4, dadurch gekennzeichnet, daß die radiale Dämpfungseinrichtung eine Vielzahl von fluiddurchlässigen Dämpfern (20) oder "dashpots" umfaßt, die zwischen dem Gehäuse (4) und dem Flansch (3) radial montiert sind.

FIG.1

FIG.2

FIG.3

EP 0 228 929 B1